# EUROPÄISCHE PATENTSCHRIFT

(11) **EP 1 705 071 B1**
(45) Veröffentlichungstag und Bekanntmachung des Hinweises auf die Patenterteilung: **16.01.2008**
(21) Anmeldenummer: 06100704.3
(22) Anmeldetag: 23.01.2006
(51) Int. Cl.: B60R 21/01

(54) **Verfahren und Vorrichtung zum Bestimmen einer Aufprallgeschwindigkeit eines Objekts für ein Sicherheitssystem eines Kraftfahrzeugs**
Method and device for determining the impact speed of an object for a vehicle safety system
Procédé et dispositif pour déterminer la vitesse d'impact d'un objet pour un système de sécurité d'un véhicule automobile

(30) Priorität: 21.03.2005 DE 102005012947
(43) Veröffentlichungstag der Anmeldung: 27.09.2006
(73) Patentinhaber: ROBERT BOSCH GMBH, 70442 Stuttgart (DE)
(72) Erfinder: Kuttenberger, Alfred, 71696 Moeglingen (DE); Bunse, Michael, 71665 Vaihingen/Enz (DE)

(56) Entgegenhaltungen:
- DE-A1- 10 323 483
- DE-A1- 10 324 217
- DE-A1- 10 334 699
- US-A- 5 835 007

## Beschreibung

### STAND DER TECHNIK

Die vorliegende Erfindung betrifft ein Verfahren und eine Vorrichtung zum Bestimmen einer Aufprallgeschwindigkeit eines Objekts für ein Sicherheitssystem, insbesondere in einem Kraftfahrzeug, mit mindestens einem Steuergerät, mindestens einem Sensor und mit mindestens einem Videosystem, und ein Sicherheitssystem mit einer solchen Vorrichtung.

Derzeit werden in Kraftfahrzeugen Mono-Videosysteme zur Fahrerassistenz für verschiedene Funktionen eingesetzt, beispielsweise zur Unterstützung beim Einparken oder Spurverlassenswarnung. Als Beispiel zur Illustration sei DE 103 24 895 A1 genannt.

Sensoren werden für Sicherheitssysteme in Kraftfahrzeugen in unterschiedlichen Ausführungen, beispielsweise als Beschleunigungssensoren, für die Funktion von Crashsensoren u. a. zur Erkennung von Seitenaufprallen, Frontcrashs oder auch zur Crashschwere-Erkennung im Frontbereich bereits seit Jahren verwendet. Ein Beispiel zur Illustration gibt DE 102 31 364 A1.
Kontaktsensoren finden Einsatz eher in der Arbeitsplatzsicherheit, aber auch im Fahrzeug für die Verwendung zum Beispiel für den aktiven Fußgängerschutz.

Mit Videosystemen ist zum Beispiel die Bestimmung einer Größe eines Objekts oder seiner Relativgeschwindigkeit nur sehr begrenzt möglich. Ein hierfür wichtiger fehlender Parameter ist die Entfernung des Objekts. Die Relativgeschwindigkeit des Objekts ist jedoch für die Realisierung einer verbesserten Rückhaltemittelsteuerung eine sehr wichtige Größe.

Aus DE 103 23 483 A1 ist eine Vorrichtung zur Bestimmung einer Relativgeschwindigkeit zwischen einem Fahrzeug und einem Aufprallobjekt bekannt. Dabei erzeugt eine Umfeldsensorik eine Relativgeschwindigkeit, und das Signal eines Kontaktsensors wird von einem Steuergerät versendet, um die Bestimmung der Relativgeschwindigkeit zu korrigieren. Die Relativgeschwindigkeit wird dann zur Auswahl der Rückhaltemittel verwendet bzw. sie geht in einen Auslösealgorithmus ein, um beispielsweise die Schwelle, die die Auslösung der Rückhaltemittel bestimmt oder auch das Signal, das mit den Auslöseschwellen verglichen wird, zu verändern. Damit kann dann in Abhängigkeit von der Relativgeschwindigkeit der Airbag-Auslösealgorithmus verschärft oder abgeschwächt werden.

### VORTEILE DER ERFINDUNG

Das erfindungsgemäße Verfahren zum Bestimmen einer Aufprallgeschwindigkeit eines Objekts für ein Sicherheitssystem, insbesondere in einem Kraftfahrzeug, ermöglicht demgegenüber durch eine Synthese der Informationen aus dem Videosystem und der Beschleunigungs- oder Kontaktsensorik eine Bestimmung der Aufprallgeschwindigkeit des Objekts durchzuführen.

Daraus ergibt sich der Vorteil, dass Sicherheitsmittel bei unterschiedlichen Aufprallgeschwindigkeiten so gezielt angepasst eingesetzt werden können, dass sie dabei jeweils ihre optimale Sicherheitswirkung entfalten.

Die Grundidee der Erfindung wird im Folgenden erläutert. Aus der Information einer Größenveränderung von einem durch ein Videosystem erfassten und in dessen Bildebene abgebildeten Objekt ist eine Zeit bestimmbar, die das Objekt bei konstanter Bewegung benötigt, um die Bildebene zu erreichen. Zusammen mit einer Abstandsinformation kann daraus die momentane Annäherungsgeschwindigkeit des Objekts bestimmt werden. Erfindungsgemäß wird aus der Sensorik des in einem Fahrzeug vorhandenen Sicherheitssystems der Kontaktzeitpunkt des Objekts mit dem Fahrzeug im Zeitpunkt der Kollision ermittelt. Aus der Fahrzeuggeometrie und der relativen Position des Videosystems ergibt sich der Abstand der Bildebene zu dem Objekt im Zeitpunkt der Kollision, da die Position des korrespondierenden Sensors in der Geometrie des Fahrzeugs bekannt ist. Im einfachsten Fall ergibt sich aus der Division dieses Abstands durch die restliche Zeit vom Zeitpunkt der Kollision des Objekts bis zu seinem Erreichen der Bildebene die momentane Annäherungs- bzw. Aufprallgeschwindigkeit des Objekts im Zeitpunkt der Kollision.

Ein Verfahren zum Bestimmen einer Aufprallgeschwindigkeit eines Objekts für ein Sicherheitssystem, insbesondere in einem Kraftfahrzeug, mit mindestens einem Steuergerät, mindestens einem Sensor und mit mindestens einem Videosystem, weist folgende Verfahrensschritte auf:

| | |
|---|---|
| (S1) | Erfassen des Objekts mittels des Videosystems durch Abbilden in dessen Bildebene zum Analysieren einer Größenveränderung des Objekts zum Bestimmen eines Zielzeitpunkts, an dem das Objekt die Bildebene durchquert; |
| (S2) | Ermitteln von weiteren Daten des Objekts und Übertragen dieser mit den im Verfahrensschritt (S1) bestimmten Daten an eine Auswerteeinrichtung im Steuergerät; |
| (S3) | Bestimmen des Kontaktzeitpunkts der Kollision des Objekts mit dem Kraftfahrzeug anhand von Signalwerten des mindestens einen Sensors durch die Auswerteeinrichtung im Steuergerät; und |
| (S4) | Bestimmen der Aufprallgeschwindigkeit des Objekts durch die Auswerteeinrichtung im Steuergerät anhand des Kontaktzeitpunkts der Kollision und der vom Videosystem übertragenen Daten. |

Im Verfahrensschritt (S1) wird bevorzugt die zeitliche Veränderung eines Objektwinkels, den das Objekt überstreicht, zum Bestimmen des Zielzeitpunkts verwendet. Diese ist vorteilhaft, da die Hauptstrahlen des Objekts durch dessen Kontur in der Bildebene relativ einfach zu erfassen sind.

Im Verfahrensschritt (S1) wird ein Startzeitpunkt beim Erfassen des Objekts als Bezugspunkt für das Bestimmen des Zielzeitpunkts bestimmt, woraus sich erforderliche Zeitdifferenzen zu weiteren Zeitpunkten leicht bestimmen lassen.

Weiterhin ist es vorteilhaft, im Verfahrensschritt (S2) als weitere Daten des Objekts eine prozentuale Überdeckung der Bildebene, die durch das Bild des Objektes entsteht, zu ermitteln. Hierdurch ist eine vorteilhafte zusätzliche Möglichkeit geschaffen, den Zielzeitpunkt zu ermitteln bzw. zu bestätigen.

In bevorzugter Ausgestaltung weist der Verfahrensschritt (S4) folgende Teilschritte auf:
(S4-1) Bestimmen eines ersten Abstands der Bildebene zu dem Objekt im Kontaktzeitpunkt der Kollision anhand des Objektwinkels, der Einbauposition einer Kamera des Videosystems und der Geometrie des Kraftfahrzeugs;
(S4-2) Bestimmen einer Zeitdifferenz zwischen dem im Verfahrensschritt (S1) bestimmten Zielzeitpunkt und dem im Verfahrensschritt (S3) bestimmten Kontaktzeitpunkt der Kollision des Objekts mit dem Kraftfahrzeug;
(S4-3) Bestimmen der Aufprallgeschwindigkeit des Objekts durch Division des ersten Abstands durch die Zeitdifferenz; und
(S4-4) Übergeben des Wertes der Aufprallgeschwindigkeit des Objekts an einen Auslösealgorithmus für Sicherheitsmittel.
Somit wird in einer vorteilhaft einfachen Berechnung die Aufprallgeschwindigkeit ermittelt.

Es ist bevorzugt, dass die Auswerteeinrichtung Bestandteil der Software des Steuergeräts ist, da somit kein erneuter Bauraum beansprucht wird.

In einer weiteren Ausführung werden die in den Verfahrensschritten (S1) und (S2) ermittelten Daten in einer Speichereinrichtung gespeichert, so dass sie jederzeit zur Auswertung zur Verfügung stehen.

Die Erfindung betrifft ebenfallseine Vorrichtung zur Bestimmung einer Aufprallgeschwindigkeit eines Objekts für ein Sicherheitssystem, insbesondere in einem Kraftfahrzeug, mit mindestens einem Steuergerät, mindestens einem Sensor und mit mindestens einem Videosystem, wobei die Vorrichtung eine Auswerteeinrichtung zur Auswertung von Daten des Videosystems zur Bestimmung einer Aufprallgeschwindigkeit des Objekts aufweist, wobei das Videosystem mit der Auswerteeinrichtung und diese mit dem Steuergerät in Verbindung steht, wobei der die Auswerteeinrichtung anhand von Signalwerten des mindestens einen Sensors einen Kontaktzeitpunkt einer Kollision des Objekts mit dem Kraftfahrzeug bestimmt, wobei das Videosystem zur Erfassung des Objekts durch Abbilden in dessen Bildebene zum Analysieren einer Größenveränderung des Objekts zum Bestimmen eines Zielzeitpunkts an dem das Objekt die Bildebene durchquert, konfiguriert ist. Damit erzeugt das Videosystem erste Daten. Weiter sind Mittel zum Ermitteln von weiteren Daten des Objekts und zum Übertragen dieser weiteren Daten mit den ersten Daten an die Auswerteeinrichtung vorgesehen. Die Auswerteeinrichtung ist weiterhin zur Bestimmung der Aufprallgeschwindigkeit des Objekts anhand des Kontaktzeitpunkts und der ersten und weiteren Daten konfiguriert.
Auf diese Weise lassen sich die Informationen des Videosystems in vorteilhaft einfacher Weise für den Algorithmus des Steuergeräts des Sicherheitssystems aufbereiten und einfügen.

In einer Ausführungsform ist die Auswerteeinrichtung im Steuergerät oder in einem Videosteuergerät angeordnet, wobei es hinsichtlich eines Einbauraums von Vorteil ist, dass die Auswerteeinrichtung als Bestandteil der Software des Steuergeräts oder des Videosteuergeräts ausgebildet ist.

In einer weiteren Ausführungsform weist das Videosystem eine Speichereinrichtung zur Speicherung von ermittelten Daten des Objekts auf, um diese jederzeit zur Auswertung oder nachträglichen Auswertung zur Verfügung zu stellen.

Vorteilhafte Ausgestaltungen und Weiterbildungen der Erfindung sind den Unteransprüchen und der Beschreibung unter Bezugnahme auf die Zeichnungen entnehmbar.

### ZEICHNUNGEN

Die Erfindung wird nachfolgend anhand der in den Figuren der Zeichnung angegebenen Ausführungsbeispiele näher erläutert.

Es zeigt dabei:
- FIG. 1: eine schematische Darstellung einer Erfassung eines Objekts mit einem Videosystem eines Kraftfahrzeugs in einem ersten Zeitpunkt zur Bestimmung einer Aufprallgeschwindigkeit;
- FIG. 2: eine weitere schematische Darstellung der Erfassung des Objekts nach Fig. 1 in einem zweiten Zeitpunkt;
- FIG. 3: eine weitere schematische Darstellung der Erfassung des Objekts nach Fig. 1 in einem zweiten Zeitpunkt; und
- FIG. 4: eine schematische Darstellung einer beispielhaften Ausführungsform einer erfindungsgemäßen Vorrichtung.

### BESCHREIBUNG DER AUSFÜHRUNGSBEISPIELE

Die Bestimmung einer Aufprallgeschwindigkeit v_{c} eines Objekts auf ein Fahrzeug ist für eine gesteuerte Auslösung von Sicherheitsmitteln, wie beispielsweise Airbags, von großer Bedeutung, denn die Sicherheitsmittel können dann bei unterschiedlichen Aufprallgeschwindigkeiten so gezielt eingesetzt werden, dass sie dabei jeweils ihre optimale Sicherheitswirkung entfalten können. Das bedeutet auch, dass bei einem Aufprall von geringer Schwere ein entsprechendes Sicherheitsmittel mit angepasster Wirkung ausgelöst wird, denn hierbei kann ein Sicherheitsmittel in einer unangepassten Wirkungsweise zu Schaden und/oder Verletzungen führen, die ein geringer Aufprall nicht verursachen würde.

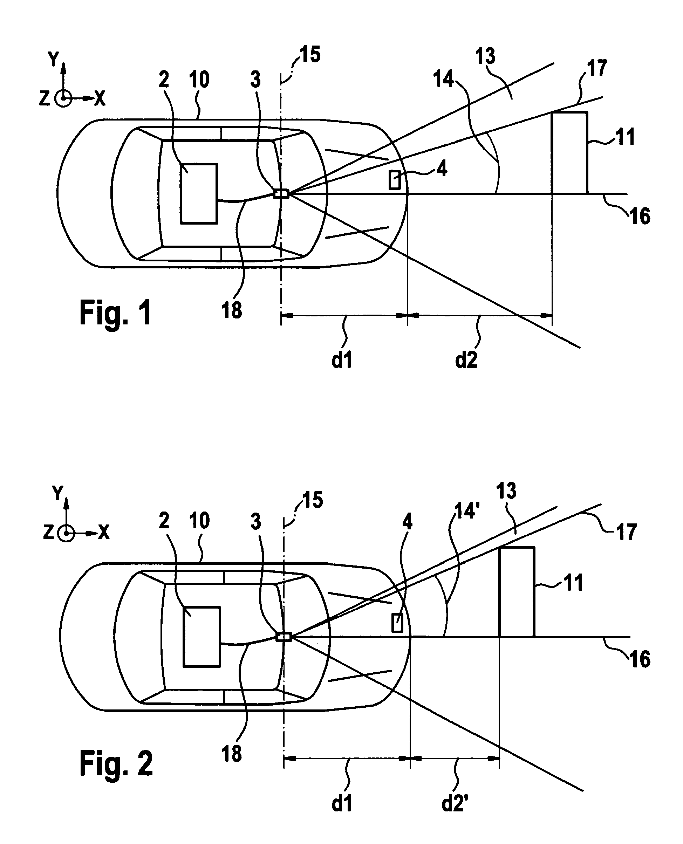

Figur 1 zeigt eine schematische Darstellung einer Erfassung des Objekts 11 mit einem Videosystem 3 eines Kraftfahrzeugs 10 in einem Startzeitpunkt t₀, wobei sich das Kraftfahrzeug 10 in x-Richtung des angegebenen Koordinatensystems bewegt.

Das Kraftfahrzeug 10 ist weiterhin mit einem Sicherheitssystem ausgerüstet, welches beispielsweise ein Steuergerät 2 zur Auslösung von Rückhaltemitteln, wie zum Beispiel ein Airbag, mit einem zugehörigen Sensor 4 ist. Der Sensor 4 befindet sich typischerweise im Frontbereich des Kraftfahrzeugs 10 und kann ein bekannter Frontsensor zur Sensierung eines Frontaufpralls sein.

Das Videosystem 3 ist mit dem Steuergerät 2 des Sicherheitssystems über eine geeignete Übertragungsstrecke 18 verbunden, welche zum Beispiel ein CAN-Bus ist.

Das Objekt 11 befindet sich als Hindernis in der Fahrtrichtung des Kraftfahrzeugs 10 in dessen Fahrspur oder am Rand der Fahrspur auf einem Kollisionskurs. Es kann ein entgegenkommendes Fahrzeug sein. Das Objekt 11 wird von dem Videosystem 3 in dessen Erfassungsbereich 13 in einem bestimmten Winkel zwischen der optischen Achse 16 des Videosystems 3 und einem Hauptstrahl des Objekts 11 erfasst. Dieser Winkel wird als Objekt- oder Feldwinkel 14 bezeichnet. Das Objekt 11 wird in bekannter Weise durch eine Optik (nicht dargestellt) des Videosystems 3 auf dessen Bildebene 15 abgebildet.

Im Startzeitpunkt t₀ des Erfassens des Objekts 11 befindet sich dieses in einem bestimmten Abstand von der Bildebene 15 des Videosystems 3. Dieser bestimmte Abstand setzt sich zusammen aus einem ersten Abstand d₁ zwischen der Bildebene 15 des Videosystems 3 und der Frontseite des Kraftfahrzeugs 10 und einem zweiten Abstand d₂ zwischen der Vorderkante des Kraftfahrzeugs 10 und der dem Kraftfahrzeug 10 zugewandten Seite des Objekts 11, wobei sich der zweite Abstand d₂ durch Annähern des Kraftfahrzeugs 10 und des Objekts 11 zueinander verkleinert.

Bei dieser Bewegung vergrößert sich der Objektwinkel 14, der dann 180° betragen würde, wenn das Objekt 11 die Bildebene 15 des Videosystems 3 erreicht.

Dazu zeigt Fig. 2 die Anordnung nach Fig. 1 in einem zweiten, späteren Zeitpunkt. Hierbei hat sich der zweite Abstand d₂ auf den zweiten Abstand d₂' verkleinert und der Objektwinkel 14 auf den Objektwinkel 14' vergrößert.

Gleichzeitig vergrößert sich die Abbildung des Objekts 11 in der Bildebene 15 des Videosystems 3, welches unter Annahme einer konstanten Bewegung des Objekts 11 die Größenveränderung des Objektbildes und die Veränderung des Objektwinkels 14 in Abhängigkeit von der ablaufenden Zeit mit dem Bezugszeitpunkt t₀ in bekannter Weise analysiert. Dabei wird der theoretische Zielzeitpunkt t₁ bestimmt, an dem das Objekt 11 die Bildebene 15 des Videosystems 3 erreicht. Damit ergibt sich eine bestimmte Zeitspanne vom Startzeitpunkt t₀ des Erfassens des Objekts 11 bis zum Zielzeitpunkt t₁ des Erreichens der Bildebene 15 durch das Objekt 11.

Weiterhin wird ein so genannter Überdeckungsgrad ermittelt, der eine prozentuale Überdeckung der Abbildung des Objekts 11 auf der Bildebene 15 des Videosystems 3 darstellt. Auch dieser prozentuale Überdeckungsgrad vergrößert sich, wenn sich das Kraftfahrzeug 10 und das Objekt 11 aufeinander zu bewegen, und kann zur weiteren Auswertung herangezogen werden.

Das Videosystem 3 überträgt die Zeitpunkte t₀ und t₁ sowie Datenwerte des prozentualen Überdeckungsgrads über die Übertragungsstrecke 18 an das Steuergerät 2 des Sicherheitssystems.

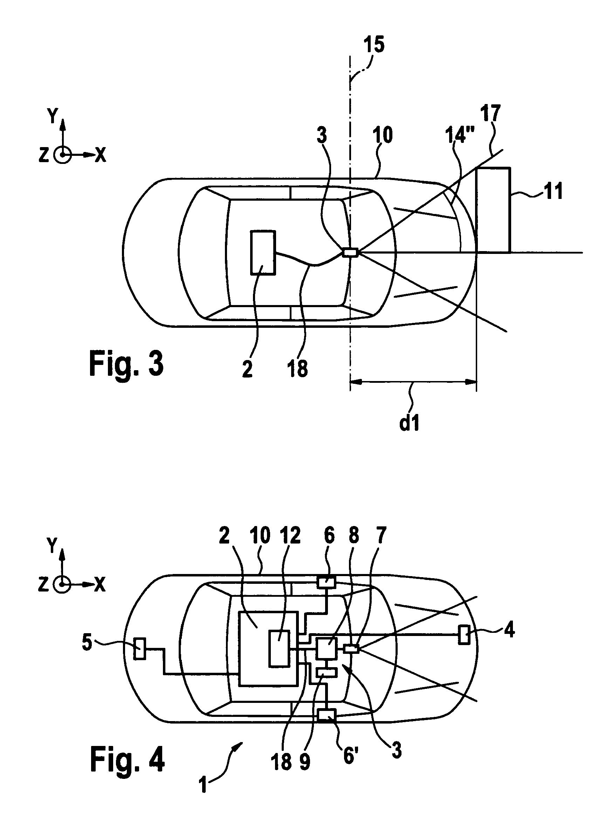

In einem Kontaktzeitpunkt t_{c} (siehe Figur 3) erfolgt eine Kollision des Objekts 11 mit dem Kraftfahrzeug 10, welche von dem Sensor 4 erfasst und in bekannter Weise dem Steuergerät 2 übermittelt wird. Dieser Kontaktzeitpunkt t_{c} wird von dem Steuergerät 2 bestimmt und zur weiteren Auswertung herangezogen, die im Folgenden erläutert wird.

Der Objektwinkel 14, 14', die Einbauposition des Videosystems 3 und somit die Lage der Bildebene 15 und die Fahrzeuggeometrie werden zusammen mit der prozentualen Überdeckung ausgewertet, um den erste Abstand d₁ der Bildebene 15 zum Objekt 11 zu ermitteln, der im Kontaktzeitpunkt t_{c} der Kollision vorhanden war. Diese Auswertung erfolgt in einer Auswerteeinrichtung 12 des Steuergeräts 2 (siehe Fig. 4) in folgender Weise und ergibt die momentane Aufprallgeschwindigkeit v_{c} des Objekts 11 im Kontaktzeitpunkt t_{c} der Kollision.

Die verbleibende Zeit vom Kontaktzeitpunkt t_{c} der Kollision bis zum Zielzeitpunkt t₁ des Erreichens der Bildebene 15 durch das Objekt 11 wird als eine Zeitdifferenz Δt₁ zwischen dem Zielzeitpunkt t₁ und dem Kontaktzeitpunkt t_{c} bestimmt. Daraufhin wird ein Bestimmen der Aufprallgeschwindigkeit v_{c} des Objekts 11 durch Division des ersten Abstands d₁ durch die Zeitdifferenz Δt₁ vorgenommen.

Die so ermittelte Aufprallgeschwindigkeit v_{c} wird nun dem Algorithmus zur Auslösung von Sicherheitsmitteln des Steuergeräts 2 übergeben.

Fig. 4 zeigt eine schematische Darstellung einer beispielhaften Ausführungsform einer erfindungsgemäßen Vorrichtung 1 in einem Kraftfahrzeug 10, wobei das Videosystem 3 eine Videokamera 7, ein Videosteuergerät 8 und eine Speichereinrichtung 9 aufweist, die miteinander in Verbindung stehen. Das Videosteuergerät 8 ist über die Übertragungsstrecke 18 mit der Auswerteeinrichtung 12 im Steuergerät 2 verbunden.

Das Steuergerät 2 weist in dieser Ausführungsform mehrere angeschlossene Sensoren auf: ein Sensor 4 zur Frontcrashsensierung, der mit dem Videosystem 3 zusammenwirkt, zwei Seitensensoren 6, 6' zur Erfassung von Seitencrashes und einen Hecksensor 5 zur Erfassung eines Heckaufpralls. Die Sensoren 5, 6, 6' arbeiten in diesem Beispiel nur mit dem Steuergerät 2 zusammen. Es ist aber selbstverständlich möglich, diese Sensoren 5, 6, 6' auch mit korrespondierenden Seiten- und Heck-Videosystemen (nicht dargestellt) zusammenwirken zu lassen. Insbesondere sind Heckvideosysteme zur Fahrerunterstützung bereits bekannt und können somit leicht integriert werden.

Mit der Erfindung ist es möglich, die momentane Aufprallgeschwindigkeit v_{c} des Objekts 11 zu bestimmen, um somit die Auslösung von entsprechenden Sicherheitsmitteln in Abhängigkeit von dieser Aufprallgeschwindigkeit optimal durchzuführen.

Die Erfindung ist nicht auf die oben beschriebenen Ausführungsbeispiele beschränkt, sondern auf vielfältige Art und Weise modifizierbar.

So ist es beispielsweise denkbar, dass die Übertragung der Datenwerte des Videosystems 3 kontinuierlich erfolgt oder bei Änderung der zuvor übertragenen Datenwerte zur Aktualisierung vorgenommen wird.

Die Datenwerte des Videosystems 3 können auch in dessen Speichereinrichtung 9 gespeichert werden, um zu jedem Zeitpunkt, auch nachträglich, von dem Steuergerät 2 bzw. der Auswerteeinrichtung 12 abrufbar zu sein.

Bei einer Anordnung von mehreren Sensoren kann der Kontaktzeitpunkt t_{c} durch das erste Sensorsignal festgelegt werden.

Die Art der Crashsensoren ist unabhängig von dem Videosystem 3. Es können zum Beispiel Beschleunigungs-, Kontakt-, oder Drucksensoren sein. Aber es sind auch andere Ausführungen denkbar.

Die Auswerteeinrichtung 12 kann auch im Videosystem 3 angeordnet sein. Sie kann als Software ausgebildet ein Bestandteil der Software des Videosystems 3 oder des Steuergeräts 2 sein. Es ist auch möglich, die Auswerteeinrichtung 12 als separates Gerät anzuordnen.

Im Ausführungsbeispiel ist die Art des Videosystems 3 ein Mono-Videosystem. Andere Ausführungen sind ebenfalls denkbar.

## Patentansprüche

1. Verfahren zum Bestimmen einer Aufprallgeschwindigkeit (v_{c}) eines Objekts (11) für ein Sicherheitssystem, insbesondere in einem Kraftfahrzeug (10), mit mindestens einem Steuergerät (2), mindestens einem Sensor (4, 5, 6, 6') und mit mindestens einem Videosystem (3), mit folgenden Verfahrensschritten:
(S1) Erfassen des Objekts (11) mittels des Videosystems (3) durch Abbilden in dessen Bildebene (15) zum Analysieren einer Größenveränderung des Objekts (11) zum Bestimmen eines Zielzeitpunkts (t₁), an dem das Objekt (11) die Bildebene (15) durchquert;
(S2) Ermitteln von weiteren Daten des Objekts (11) und Übertragen dieser mit den im Verfahrensschritt (S1) bestimmten Daten an eine Auswerteeinrichtung (12) im Steuergerät (2);
(S3) Bestimmen eines Kontaktzeitpunkts (t_{c}) der Kollision des Objekts (11) mit dem Kraftfahrzeug (10) anhand von Signalwerten des mindestens einen Sensors (4, 5, 6, 6') durch die Auswerteeinrichtung (12) im Steuergerät (2); und
(S4) Bestimmen der Aufprallgeschwindigkeit (v_{c}) des Objekts (11) durch die Auswerteeinrichtung (12) im Steuergerät (2) anhand des Kontaktzeitpunkts (t_{c}) der Kollision und der vom Videosystem (3) übertragenen Daten.

2. Verfahren nach Anspruch 1,
**dadurch gekennzeichnet,**
**dass** im Verfahrensschritt (S1) die zeitliche Veränderung eines Objektwinkels (14), den das Objekt (11) überstreicht, zum Bestimmen des Zielzeitpunkts (t₁) verwendet wird.

3. Verfahren nach Anspruch 1 oder 2,
**dadurch gekennzeichnet,**
**dass** im Verfahrensschritt (S1) ein Startzeitpunkt (t₀) beim Erfassen des Objekts (11) als Bezugspunkt für das Bestimmen des Zielzeitpunkts (t₁) bestimmt wird.

4. Verfahren nach einem der Ansprüche 1 bis 3,
**dadurch gekennzeichnet,**
**dass** im Verfahrensschritt (S2) als weitere Daten des Objekts (11) eine prozentuale Überdeckung der Bildebene (15), die durch das Bild des Objektes (11) entsteht, ermittelt wird.

5. Verfahren nach einem der Ansprüche 1 bis 4,
**dadurch gekennzeichnet,**
**dass** der Verfahrensschritt (S4) folgende Teilschritte aufweist:
(S4-1) Bestimmen eines ersten Abstands (d₁) der Bildebene (15) zu dem Objekt (11) im Kontaktzeitpunkt (t_{c}) der Kollision anhand des Objektwinkels (14), der Einbauposition einer Kamera (7) des Videosystems (3) und der Geometrie des Kraftfahrzeugs (10);
(S4-2) Bestimmen einer Zeitdifferenz (Δt₁) zwischen dem im Verfahrensschritt (S1) bestimmten Zielzeitpunkt (t₁) und dem im Verfahrensschritt (S3) bestimmten Kontaktzeitpunkt (t_{c}) der Kollision des Objekts (11) mit dem Kraftfahrzeug (10);
(S4-3) Bestimmen der Aufprallgeschwindigkeit (v_{c}) des Objekts (11) durch Division des ersten Abstands (d₁) durch die Zeitdifferenz (Δt₁); und
(S4-4) Übergeben des Wertes der Aufprallgeschwindigkeit (v_{c}) des Objekts (11) an einen Auslösealgorithmus für Sicherheitsmittel.

6. Verfahren nach einem der Ansprüche 1 bis 5,
**dadurch gekennzeichnet,**
**dass** die Auswerteeinrichtung (12) Bestandteil der Software des Steuergeräts (2) ist.

7. Verfahren nach einem der Ansprüche 1 bis 6,
**dadurch gekennzeichnet,**
**dass** die in den Verfahrensschritten (S1) und (S2) ermittelten Daten in einer Speichereinrichtung (9) gespeichert werden.

8. Vorrichtung (1) zur Bestimmung einer Aufprallgeschwindigkeit (v_{c}) eines Objekts (11) für ein Sicherheitssystem, insbesondere in einem Kraftfahrzeug (10), mit mindestens einem Steuergerät (2), mindestens einem Sensor (4, 5, 6, 6') und mit mindestens einem Videosystem (3), wobei die Vorrichtung (1) eine Auswerteeinrichtung (12) zur Auswertung von Daten des Videosystems (3) zur Bestimmung einer Aufprallgeschwindigkeit (v_{c}) des Objekts (11) aufweist, wobei das Videosystem (3) mit der Auswerteeinrichtung (12) und diese mit dem Steuergerät (2) in Verbindung steht, wobei der die Auswerteeinrichtung (12) anhand von Signalwerten des mindestens einen Sensors (4, 5, 6, 6') einen Kontaktzeitpunkt (t_{c}) einer Kollision des Objekts (11) mit dem Kraftfahrzeug (10) bestimmt, **dadurch gekennzeichnet, dass** das Videosystem (3) zur Erfassung des Objekts (11) durch Abbilden in dessen Bildebene (15) zum Analysieren einer Größenveränderung des Objekts (11) zum Bestimmen eines Zielzeitpunkts (t₁), an dem das Objekt (11) die Bildebene (15) durchquert, konfiguriert ist, wobei das Videosystem (3) damit erste Daten erzeugt, dass Mittel zum Ermitteln von weiteren Daten des Objekts (11) und zum Übertragen dieser weiteren Daten mit den ersten Daten an die Auswerteeinrichtung vorgesehen sind, und dass die Auswerteeinrichtung (12) weiterhin zur Bestimmung der Aufprallgeschwindigkeit (v_{c}) des Objekts (11) anhand des Kontaktzeitpunkts (t_{c}) und der ersten und weiteren Daten konfiguriert ist.

9. Vorrichtung nach Anspruch 8,
**dadurch gekennzeichnet,**
**dass** die Auswerteeinrichtung (12) im Steuergerät (2) oder in einem Videosteuergerät (8) angeordnet ist.

10. Vorrichtung nach Anspruch 8,
**dadurch gekennzeichnet,**
**dass** die Auswerteeinrichtung (12) als Bestandteil der Software des Steuergeräts (2) oder des Videosteuergeräts (8) ausgebildet ist.

11. Vorrichtung nach einem der Ansprüche 8 bis 10
**dadurch gekennzeichnet,**
**dass** das Videosystem (3) eine Speichereinrichtung (9) zur Speicherung von ermittelten Daten des Objekts (11) aufweist.

## Claims

1. Method for determination of an impact speed (v_{c}) of an object (11) for a safety system, in particular in a motor vehicle (10), having at least one controller (2), at least one sensor (4, 5, 6, 6') and having at least one video system (3), having the following method steps:
(S1) the object (11) is detected by means of the video system (3) by imaging on its image plane (15) for analysis of a change in size of the object (11) in order to determine a target time (t₁) at which the object (11) crosses through the image plane (15);
(S2) further data relating to the object (11) is determined, and this data is transmitted together with the data determined in method step (S1) to an evaluation device (12) in the controller (2);
(S3) a contact time (t_{c}) of the collision of the object (11) with the motor vehicle (10) is determined on the basis of signal values from the at least one sensor (4, 5, 6, 6') by the evaluation device (12) in the controller (2); and
(S4) the impact speed (v_{c}) of the object (11) is determined by the evaluation device (12) in the controller (2) on the basis of the contact time (t_{c}) of the collision and the data transmitted from the video system (3).

2. Method according to Claim 1,
**characterized**
**in that**, in method step (S1), the rate of change of an object angle (14) which is passing over the object (11) is used to determine the target time (t₁).

3. Method according to Claim 1 or 2,
**characterized**
**in that**, in method step (S1), a start time (t₀) is determined for detection of the object (11) as a reference point for determination of the target time (t₁).

4. Method according to one of Claims 1 to 3,
**characterized**
**in that**, in method step (S2), a percentage coverage of the image plane (15) which is created by the image of the object (11) is determined as further data relating to the object (11).

5. Method according to one of Claims 1 to 4,
**characterized**
**in that** the method step (S4) has the following substeps:
(S4-1) a first distance (d₁) between the image plane (15) and the object (11) at the contact time (t_{c}) of the collision is determined on the basis of the object angle (14), the installation position of a camera (7) of the video system (3), and the geometry of the motor vehicle (10);
(S4-2) a time difference (Δt₁) is determined between the time (t₁) determined in method step (S1) and the contact time (t_{c}), determined in method step (S3), of the collision of the object (11) with the motor vehicle (10);
(S4-3) the impact speed (v_{c}) of the object (11) is determined by division of the first distance (d₁) by the time difference (Δt₁) ; and
(S4-4) the value of the impact speed (v_{c}) of the object (11) is transferred to an initiation algorithm for safety means.

6. Method according to one of Claims 1 to 5,
**characterized**
**in that** the evaluation device (12) is a component of the software for the controller (2).

7. Method according to one of Claims 1 to 6,
**characterized**
**in that** the data determined in method steps (S1) and (S2) is stored in a memory device (9).

8. Apparatus (1) for determination of an impact speed (v_{c}) of an object (11) for a safety system, in particular in a motor vehicle (10), having at least one controller (2), at least one sensor (4, 5, 6, 6') and having at least one video system (3), with the apparatus (1) having an evaluation device (12) for evaluation of data from the video system (3) in order to determine an impact speed (v_{c}) of the object (11), with the video system (3) being connected to the evaluation device (12) and with the latter being connected to the controller (2), with the evaluation device (12) using the signal values from the at least one sensor (4, 5, 6, 6') to determine a contact time (t_{c}) of a collision of the object (11) with the motor vehicle (10), **characterized in that** the video system (3) is configured to detect the object (11) by imaging on its image plane (15) for analysis of a change in size of the object (11) in order to determine a target time (t₁) at which the object (11) crosses through the image plane (15), with the video system (3) thus producing first data items, **in that** means are provided for determination of further data relating to the object (11) and for transmission of this further data together with the first data to the evaluation device, and **in that** the evaluation device (12) is also configured to determine the impact speed (v_{c}) of the object (11) on the basis of the contact time (t_{c}) and the first and further data items.

9. Apparatus according to Claim 8,
**characterized**
**in that** the evaluation device (12) is arranged in the controller (2) or in a video controller (8).

10. Apparatus according to Claim 8,
**characterized**
**in that** the evaluation device (12) is a component of the software for the controller (2) or for the video controller (8).

11. Apparatus according to one of Claims 8 to 10,
**characterized**
**in that** the video system (3) has a memory device (9) for storage of data determined for the object (11).

## Revendications

1. Procédé de détermination de la vitesse de collision (v_{c}) d'un objet (11) pour un système de sécurité et notamment dans un véhicule automobile (10), comprenant au moins un appareil de commande (2), au moins un capteur (4 ; 5, 6, 6') et au moins un système vidéo (3)
selon les étapes de procédé suivantes :
| | |
|---|---|
| (S1) | saisir l'objet (11) à l'aide du système vidéo (3) en formant l'image dans son plan image (15) pour analyser une variation de dimension de l'objet (11) et déterminer l'instant cible (t₁) auquel l'objet (11) traverse le plan image (15), |
| (S2) | déterminer d'autres données de l'objet (11) et les transmettre à l'aide de données obtenues dans les tables de procédé (S1) vers une installation d'exploitation (12) de l'appareil de commande (2) |
| (S3) | déterminer un instant de contact et faire un essai de collision de l'objet (11) avec le véhicule (10) à l'aide des valeurs des signaux d'au moins un capteur (4 ; 5, 6, 6') par l'installation d'exploitation (12) de l'appareil de commande (2) |
| (S4) | déterminer la vitesse de collision (v_{c}) de l'objet (11) par l'installation d'exploitation (12) de l'appareil de commande (2) à l'aide de l'instant du contact (t_{c}) de la collision et des données transmises par le système vidéo (3). |

2. Procédé selon la revendication 1,
**caractérisé en ce que**
dans les tables de procédé (S1), on utilise la variation dans le temps de l'angle (14) que balaye l'objet (11) pour déterminer l'instant cible (t₁).

3. Procédé selon la revendication 1 ou 2,
**caractérisé en ce que**
dans les tables de procédé (S1), on détermine un point de départ (t₀) pour la saisie de l'objet (11) au point de référence pour déterminer l'instant cible (t₁).

4. Procédé selon l'une des revendications 1 à 3,
**caractérisé en ce que**
dans les tables de procédé (S2), on détermine comme autres données de l'objet (11), un recouvrement en pourcentage du plan image (15) engendré par l'image de l'objet (11).

5. Procédé selon l'une des revendications 1 à 4,
**caractérisé en ce que**
l'étape de procédé (S4) comprend les étapes partielles suivantes :
| | |
|---|---|
| (S4-1) | détermination d'une première distance (d1) du plan image (15) par rapport à l'objet (11) à l'instant du contact (tc) de la collision à l'aide de l'angle de l'objet (14), de la position de montage d'une caméra (7) du système vidéo (3) et de la géométrie du véhicule automobile (10), |
| (S4-2) | détermination d'une différence de temps (Δt₁) entre l'instant cible (t₁) déterminé dans l'étape de procédé (S1) et l'instant de contact (t_{c}) de la collision de l'objet (11) avec le véhicule (10), déterminé par l'étape de procédé (S1), |
| (S4-3) | détermination de la vitesse de collision (v_{c}) de l'objet (11) par division de la première distance (d1) par la différence de temps (Δt₁)) et |
| (S4-4) | transmission de la valeur de la vitesse de collision (v_{c}) de l'objet (11) à un algorithme de déclenchement des moyens de sécurité. |

6. Procédé selon l'une des revendications 1 à 5,
**caractérisé en ce que**
l'installation d'exploitation (12) fait partie du programme de l'appareil de commande (2).

7. Procédé selon l'une des revendications 1 à 6,
**caractérisé en ce que**
les données déterminées dans les étapes de procédé (S1 et S2) sont mémorisées dans une installation de mémoire (9).

8. Dispositif (1) de détermination de la vitesse d'impact (v_{c}) d'un objet (11), pour un système de sécurité notamment dans un véhicule automobile (10) comprenant au moins un appareil de commande (2), au moins un capteur (4 ; 5, 6, 6') et au moins un système vidéo (3),
le dispositif (1) ayant une installation d'exploitation (12) pour exploiter les données du système vidéo (3), pour déterminer la vitesse de collision (v_{c}) de l'objet (11),
le système vidéo (3) étant relié à l'installation d'exploitation (12) et celle-ci est reliée à l'appareil de commande (2) qui détermine l'installation d'exploitation (12) à l'aide des valeurs de signal d'au moins un capteur (4 ; 5, 6, 6') d'un instant du contact (tc) d'une collision de l'objet (11) avec le véhicule (10),
**caractérisé en ce que**
le système vidéo (3) est configuré pour saisir l'objet (11) en formant son image dans son plan-image (15) pour analyser la variation de dimension de l'objet (11) et déterminer l'instant cible (t₁) auquel l'objet (11) traverse le plan-image (15),
le système vidéo (3) générant ainsi des premières données,
des moyens étant prévus pour déterminer d'autres données de l'objet (11) et pour les transmettre avec les premières données vers l'installation d'exploitation et
l'installation d'exploitation (12) est en outre configurée pour déterminer la vitesse de collision (v_{c}) de l'objet (11) à l'aide de l'instant de contact (tc), ainsi que les premières et autres données.

9. Dispositif selon la revendication 8,
**caractérisé en ce que**
l'installation d'exploitation (12) se trouve dans l'appareil de commande (2) ou dans un appareil de commande vidéo (8).

10. Dispositif selon la revendication 8,
**caractérisé en ce que**
l'installation d'exploitation (12) fait partie du programme de l'appareil de commande (2) ou de l'appareil de commande vidéo (8).

11. Dispositif selon l'une des revendications 8 à 10,
**caractérisé en ce que**
le système vidéo (3) comporte une installation de mémoire (9) pour enregistrer les données déterminées de l'objet (11).
